# EUROPÄISCHE PATENTSCHRIFT

(11) **EP 0 356 378 B1**
(45) Veröffentlichungstag und Bekanntmachung des Hinweises auf die Patenterteilung: **18.08.1993**
(21) Anmeldenummer: 89810512.7
(22) Anmeldetag: 06.07.1989
(51) Int. Cl.: F01N 7/10, F02B 37/02, F02B 27/04

(54) **Abgassammel-Leitung eines Dieselmotors mit Zylinderzahl 9 oder 18**
Exhaust gas manifold of a diesel engine with 9 or 18 cylinders
Collecteur d'échappement d'un moteur diesel à 9 ou 18 cylindres

(30) Priorität: 17.08.1988 CH 3073/88
(43) Veröffentlichungstag der Anmeldung: 28.02.1990
(73) Patentinhaber: GEBRÜDER SULZER AKTIENGESELLSCHAFT, CH-8401 Winterthur (CH)
(72) Erfinder: Ruch, Henri, CH-8553 Mettendorf (CH)

(56) Entgegenhaltungen:
- DE-A- 1 451 908
- FR-A- 2 378 178
- FR-A- 2 572 458
- US-A- 2 230 666

## Beschreibung

Die Erfindung bezieht sich auf eine Abgassammel-Leitung mit den Merkmalen des Oberbegriffs des Anspruchs 1.

Es gibt Anordnungen bei Dieselmotoren, bei denen die Zylinderzahl pro Zylinderreihe zusammen mit der Festlegung der Zündfolge zwischen den Zylindern einer Reihe bestimmt, wie stark sich Druckspitzen beim Gasausstoss eines Zylinders auf den Spülvorgang eines anderen Zylinders über die Abgassammel-Leitung auswirken. Typisch dafür sind Dieselmotoren mit neun Zylindern pro Reihe, weil in dieser Anordnung für jeden Zylinder der Gasausstoss in die Abgassammel-Leitung mit der Spülphase eines um zwei Zündungen vorherliegenden Zylinders zusammenfällt. Ganz allgemein entstehen bei gleicher Geometrie der Zylinderabgasleitungen unterschiedlich hohe Druckspitzen für den Gasausstoss in der Abgassammel-Leitung, die von der Lage der Einmündung der Zylinderabgasleitung zum Verschluss abhängen. Beim Gasausstoss des Zylinders, der am nächsten zum Verschluss liegt, wird mit dem Eintritt in die Abgassammel-Leitung eine sich allseitig ausbreitende Druckwelle am Verschluss reflektiert und der reflektierte Anteil überlagert sich als Ueberhöhung der Grundwelle in Richtung Austritt. Das gleiche gilt auch für den Gasausstoss von davor in Richtung Austritt liegenden Zylindern, wobei die Wirkung der Ueberhöhung mit dem Abstand der Einmündung der Zylinderabgasleitung zum Verschluss abnimmt.

Unangenehm wird dieser Vorgang erst dadurch, dass durch die vorgegebene Zahl von neun Zylindern pro Reihe der Gasausstoss eines Zylinders jeweils mit der Spülphase eines zwei Zündungen vorher liegenden Zylinders zusammenfällt und dessen Gasspülung entsprechend der Ueberhöhung der Druckspitze unvollständig ausfallen lässt, was zu nicht tragbaren Temperaturerhöhungen führen kann. Die höchste Druckspitze wird beim Gasausstoss des Zylinders erzeugt, der am nächsten beim Verschluss einmündet, wobei bei der Zündfolge der Zylinder 1, 7, 4, 2, 8, 6, 3, 9, 5, 1 der Gasausstoss von Zylinder Nr.9 den Spülvorgang an Zylinder Nr.6 gefährdet und bei der Zündfolge der Zylinder 1, 5, 9, 3, 6, 8, 2, 4, 7, 1 der Gasausstoss von Zylinder Nr.1 den Spülvorgang an Zylinder Nr.4 gefährdet.

In vermindertem Mass entstehen ebenfalls Druckspitzen beim Gasausstoss von Abgasleitungen, die weiter entfernt vom Verschluss in die Abgasssammel-Leitung einmünden. Bis anhin hat man sich damit beholfen, entweder Zylinderzahlen mit neun Zylindern pro Reihe - obwohl sie andere Vorteile bringen können - zu vermeiden oder niedrigere Drücke am Austritt der Abgassammel-Leitung in Kauf zu nehmen, die einen Turbolader mit besserem Wirkungsgrad und entsprechend höheren Investitionskosten erfordern.

Die Aufgabe der Erfindung besteht darin, für Dieselmotoren mit einer Zylinderzahl von neun oder achtzehn die überhöhten Druckwellen in den Abgassammel-Leitungen so zu dämpfen, dass keine unvollständigen Spülungen während der Spülphase eines einzelnen Zylinders auftreten und dass der Turbolader mit möglichst hohem Druck aus der Abgassammel-Leitung angespiesen werden kann.

Diese Aufgabe wird erfindungsgemäss durch die Merkmale des Kennzeichens des Anspruchs 1 gelöst. Eine Ausführung der Restriktion als Düse ist besonders vorteilhaft, da hierdurch die Strömungsverluste klein gehalten werden. Die Wirkung der Erfindung beruht im wesentlichen darauf, dass die gefährlichsten Ueberhöhungen der Druckwelle beim Gasausstoss der Zylinder durch eine Verzögerung der Reflexion in der Abgassammel-Leitung gedämpft werden. In die gleiche Richtung wirkt auch ein Druckspeicher, wenn er als Verschluss der Abgassammel-Leitung dient. Der Druckimpuls wird länger und flacher.

Somit gestattet die Erfindung mit dem Einbau einer Restriktion in der Abgassammel-Leitung die für Dieselmotoren mit neun Zylindern pro Reihe gefährlichsten Drucküberhöhungen entgegen dem Spülvorgang so zu dämpfen, dass Auslegungsvorteile und geringe Investitionen für den Turbolader entstehen.

Der aufgeladenen 4-Takt-V-Brennkraftmaschine mit zwei Reihen von je vier Zylindern gemäss der DE-OS 1 451 908 liegt eine ähnliche Aufgabe zugrunde, nämlich die Druckspitzen abzubauen und eine ausreichende Spülung der Toträume zu ermöglichen. Die Lösung besteht darin, für jede Reihe einen zweiflutigen Turbolader vorzusehen, wobei der jeweils vom Turbolader am weitesten entfernt liegende Zylinder jeder Reihe über einen Auspuffbehälter mit dem einen Eintritt des zugehörigen Turboladers und die restlichen drei Zylinder jeder Reihe mit dem anderen Eintritt des zugehörigen Turboladers verbunden sind und wobei in der Abgasleitung der restlichen drei Zylinder eine Ejektordüse vorgesehen ist, und zwar an der Einmündung des jeweils vom Turbolader am weitest entfernten Zylinders der Dreiergruppe. Ausserdem ist die Zündfolge der zweimal vier Zylinder von der des erfindungsgemässen 9- oder 18-Zylindermotors verschieden.

Die Erfindung wird anhand von einem Ausführungsbeispiel mit der Zündfolge der Zylinder 1, 7, 4, 2, 8, 6, 3, 9, 5, 1 im Zusammenhang mit der Zeichnung näher erläutert.
- Fig. 1: ist eine schematische Darstellung einer Abgassammel-Leitung mit einer erfindungsgemässen Restriktion sowie der Zylinder mit ihren Abgasleitungen und des Turboladers.
- Fig. 2: ist ein schematischer Schnitt durch das mit einem Deckel verschlossene Ende der Abgassammel-Leitung und der Einmündung der Abgasleitung des Zylinders Nr. 9 und
- Fig. 3: zeigt schematisch die zu verschiedenen Zeiten gemessenen und einander überlagerten Druckverläufe für einen Messpunkt in der Abgassammel-Leitung, der in Strömungsrichtung hinter dem Einbauort der erfindungsgemässen Restriktion liegt.

In den Figuren ist eine Abgassammel-Leitung von Dieselmotoren mit Zylinderzahlen 9 oder 18 mit neun linear angeordneten und fortlaufend nummerierten Zylindern 1, 2, 3, 4, 5, 6, 7, 8, 9 pro Reihe mit einer pro Reihe mehrfach zusammengsetzten/längs zu den Zylindern einer Reihe verlaufenden Abgassammel-Leitung 17 dargestellt, die mit einer Zündfolge der Zylinder 1, 7, 4, 2, 8, 6, 3, 9, 5, 1 an dem Ende beim Zylinder Nr.1 einen Auslass zu einem Turbolader 10 und an dem Ende beim Zylinder Nr.9 einen Abschlussdeckel aufweist.

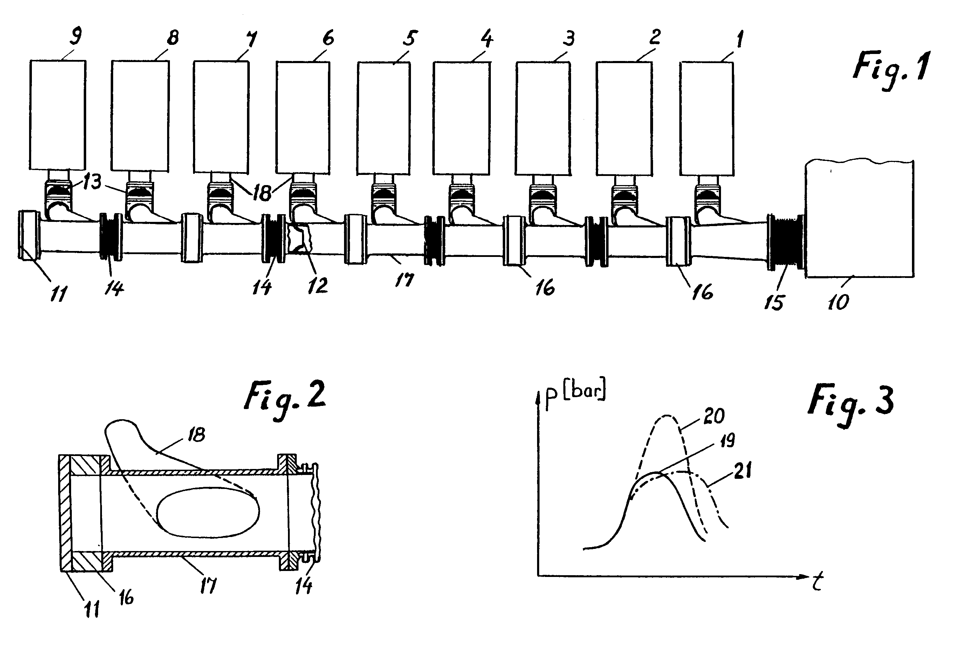

Erfindungsgemäss ist vom Abschlussdeckel 11 in Richtung Gasaustritt gesehen zwischen den Einmündungen der Zylinderabgasleitungen 18 des Zylinders Nr.6 und des Zylinders Nr.7 eine Restriktion 12 in der Abgassammel-Leitung 17 eingebaut, deren Durchtrittsquerschnitt eine Fläche von 40 bis 60 % vom benachbarten Querschnitt der Abgassammel-Leitung 17 aufweist und die den mittleren Druck in der Abgassammel-Leitung 17 zwischen der Restriktion 12 und dem Abschlussdeckel 11 um ca. 0,1 bar erhöht. Um Wärmeausdehnung und mechanische Schwingungen besser abzufangen, ist die Abgassammel-Leitung segmentweise an Zwischenstücken mit Abstützung 16 befestigt und mit Kompensatoren 13, 14, 15 gegen das restliche System abgegrenzt. In Fig. 3 sind für einen Messpunkt in der Abgassammel-Leitung, der sich in Strömungsrichtung hinter dem Einbauort der Restriktion 12 befindet, die zu verschiedenen Zeiten aufgenommenen Druckverläufe dargestellt, wobei der Verlauf 19 einen Gasausstoss aus Zylinder Nr.3 ohne eingebaute Restriktion 12 darstellt und wobei der Verlauf 20 einen Gasausstoss aus Zylinder Nr.9 ohne eingebaute Restriktion 12 darstellt, wie er sich aus der in Fig. 2 gezeigten Anordnung ergibt, während der Verlauf 21 einen Gasausstoss aus Zylinder Nr.9 mit eingebauter Restriktion 12 darstellt.

## Patentansprüche

1. Abgassammel-Leitung (17) von Dieselmotoren mit neun oder achtzehn Zylindern, wobei jeweils in einer Reihe neun Zylinder linear angeordnet und fortlaufend mit Nr.1 bis 9 nummeriert sind, wobei die jeweils längs einer Zylinderreihe verlaufende Abgassammel-Leitung mehrfach zusammengesetzt ist und bei einer Zündfolge der Zylinder Nr.1, 7, 4, 2, 8, 6, 3, 9, 5, 1 an dem Ende beim Zylinder Nr.1 einen Auslass zu einem Turbolader (10) und an dem Ende beim Zylinder Nr.9 einen Verschluss (11) aufweist, während sie bei einer umgekehrten Zündfolge der Zylinder Nr.1, 5, 9, 3, 6, 8, 2, 4, 7, 1 an dem Ende beim Zylinder Nr.9 einen Auslass zu einem Turbolader (10) und am Ende beim Zylinder Nr.1 einen Verschluss (11) aufweist,
dadurch gekennzeichnet, dass - vom Verschluss (11) in Richtung Gasaustritt gesehen - nur zwischen den Einmündungen der dritten und der vierten Zylinderabgasleitung (18) eine Restriktion (12) vorhanden ist, deren Durchtrittsquerschnitt eine Fläche von 40 bis 60 % vom benachbarten Querschnitt der Abgassammel-Leitung (17) aufweist.

2. Abgassammel-Leitung gemäss Anspruch 1, dadurch gekennzeichnet, dass die Restriktion (12) als Düse ausgeführt ist.

3. Abgassammel-Leitung gemäss Anspruch 1 oder 2, dadurch gekennzeichnet, dass die mit der Restriktion (12) erzeugte mittlere Druckerhöhung in der Abgassammel-Leitung (17) zwischen dem Verschluss (11) und der Restriktion (12) ca. 0,1 bar beträgt.

4. Abgassammel-Leitung gemäss Anspruch 1 oder 3, dadurch gekennzeichnet, dass der Verschluss (11) ein Deckel oder ein Druckspeicher ist.

## Claims

1. An exhaust gas manifold (17) of diesel engines having nine or eighteen cylinders, nine cylinders being arranged linearly in each row and being continuously numbered from No.1 to No.9, the exhaust gas manifold along each cylinder line being assembled from a number of parts and, given an ignition sequence of the cylinders No.1, 7, 4, 2, 8, 6, 3, 9, 5, 1, having an exhaust to a turbocharger (10) at the end at cylinder No.1 and a closure (11) at the end at cylinder No.9, while given a reverse ignition sequence of the cylinders No.1, 5, 9, 3, 6, 8, 2, 4, 7, 1, having an exhaust to a turbocharger (10) at the end at cylinder No.9, and a closure (11) at the end at cylinder No.1, characterised in that as considered in the direction of the gas exit from the closure (11) there is a restriction (12) only between the entries of the third and fourth cylinder exhaust gas pipe (18), the passage cross-section of the restriction having an area of from 40 to 60% of the adjoining cross-section of the exhaust gas manifold (17).

2. An exhaust gas manifold according to claim 1,
characterised in that the restriction (12) is in the form of a nozzle.

3. An exhaust gas manifold according to claim 1 or 2,
characterised in that the average pressure increase produced by the restriction (12) in the exhaust gas manifold (17) between the closure (11) and the restriction (12) is about 0.1 bar.

4. An exhaust gas manifold according to claim 1 or 3,
characterised in that the closure (11) is a cover or a pressure accumulator.

## Revendications

1. Conduit (17) collecteur des gaz d'échappement de moteurs diésel à neuf ou dix-huit cylindres, neuf cylindres étant disposés linéairement en une ligne et étant numérotés successivement n° 1 à 9, le conduit collecteur des gaz d'échappement qui est disposé le long de chaque ligne de cylindres étant formé d'un assemblage de plusieurs éléments et, pour une séquence d'allumage des cylindres n° 1, 7, 4, 2, 8, 6, 3, 9, 5, 1, ce conduit collecteur comportant à l'extrémité voisine du cylindre n° 1 une sortie sur un turbo-compresseur de suralimentation (10) et, à l'extrémité voisine du cylindre n° 9, un obturateur (11), tandis que, pour une séquence inverse d'allumage des cylindres n° 1, 5, 9, 3, 6, 8, 2, 4, 7, 1, ce conduit collecteur comporte à l'extrémité voisine du cylindre n° 9 une sortie sur un turbo-compresseur de suralimentation (10) et à l'extrémité voisine du cylindre n° 1, un obturateur (11), caractérisé en ce qu'un étranglement (12) n'est présent qu'entre les embouchures des conduits (18) des gaz d'échappement du troisième et du quatrième cylindre - dans le sens allant de l'obturateur (11) vers la sortie des gaz -, la section de passage de cet étranglement ayant une surface de 40 à 60% de la section voisine du conduit collecteur des gaz d'échappement (17).

2. Conduit collecteur des gaz d'échappement selon la revendication 1, caractérisé en ce que l'étranglement (12) est constitué d'une tuyère.

3. Conduit collecteur des gaz d'échappement selon la revendication 1 ou 2, caractérisé en ce que l'élévation moyenne de pression produite par l'étranglement (12) dans le conduit collecteur des gaz d'échappement (17) entre l'obturateur (11) et l'étranglement (12) est d'environ 0,1 bar.

4. Conduit collecteur des gaz d'échappement selon la revendication 1 ou 3, caractérisé en ce que l'obturateur (11) est un couvercle ou un accumulateur de pression.
